# EUROPEAN PATENT APPLICATION

(11) **EP 4 707 864 A1**
(43) Date of publication of application: **11.03.2026**
(21) Application number: 25182366.2
(22) Date of filing: 12.06.2025
(51) Int. Cl.: G01S 17/42, G01S 7/48, G01S 17/931, G01S 7/497

(54) **METHOD AND APPARATUS FOR DETECTING MALFUNCTION OF LIDAR, AND METHOD AND APPARATUS FOR GENERATING DATA THEREFOR**

(30) Priority: 12.06.2024 KR 20240076392
(71) Applicant: KIAPI (Korea Intelligent Automotive Parts Promotion Institute), Dalseong-gun, Daegu 43011 (KR)
(72) Inventor: SEONG, Jae Ho, Daegu, 42678 (KR)
(74) Representative: Stratagem IPM Limited

(57) **Abstract**

A method and an apparatus for detecting malfunction of LIDAR, and a method and an apparatus for generating data therefor are disclosed.

According to an aspect of the present disclosure, there is provided a method for detecting malfunction of a LIDAR, including: acquiring point cloud data from the LIDAR; determining whether the number of points included in the point cloud data is less than a point count threshold; and determining whether the LIDAR has a fault based on the point cloud data by using a LIDAR malfunction detection model when the number of points is greater than or equal to the point count threshold, wherein the LIDAR malfunction detection model is a pre-trained model based on a normal dataset and at least one LIDAR-abnormal dataset, the normal dataset includes preset statistics and point cloud data acquired from the LIDAR in a normal state, and the LIDAR-abnormal dataset includes point cloud data generated based on the normal dataset.

## Description

### TECHNICAL FIELD

The present disclosure relates to a method and an apparatus for detecting malfunction of LIDAR, and a method and an apparatus for generating data therefor.

### BACKGROUND

The content described below merely provides background information related to the present embodiment and does not constitute the related art.

In the past, in order to detect a malfunction of a LIDAR, a method of determining an operating state of the LIDAR by analyzing a received signal of a laser, a method of calculating the separation distance between a plurality of sensors installed and fixed on a vehicle and one target object and determining the failure of the LIDAR using an error in the separation distance, and the like have been used.

Such existing methods detect malfunctions of the LIDAR using test patterns or targets in a specific environment. Therefore, there is a limitation in that it is possible to detect malfunctions of LIDAR using existing methods only in the specific environment.

Since the above existing methods detect malfunction of LIDAR based on the operation of the LIDAR, a situation in which the LIDAR operates is assumed. Therefore, in a situation where the LIDAR does not operate, there is a limitation in that malfunction of LIDAR may not be detected using existing methods.

### SUMMARY

An object of the present disclosure is to provide a method and an apparatus for detecting malfunction of LIDAR using artificial intelligence technology, and a method and an apparatus for generating data therefor. Specifically, a main object of the present disclosure is to provide a method and an apparatus for detecting malfunction of LIDAR, and a method and an apparatus for generating data therefor, in which a type-specific LIDAR-abnormal dataset is generated based on a normal dataset, a LIDAR malfunction detection model is trained based on the normal dataset and the LIDAR-abnormal dataset, and the trained LIDAR malfunction detection model is used to determine whether there is a fault in the LIDAR, thereby enabling detection of LIDAR malfunctions in various environments.

The problem to be solved by the present invention is not limited to the above-mentioned problems, and other problems not mentioned will be clearly understood by a person skilled in the art from the following description.

According to an aspect of the present disclosure, there is provided a method for detecting malfunction of a LIDAR, including: acquiring point cloud data from the LIDAR; determining whether the number of points included in the point cloud data is less than a point count threshold; and determining whether the LIDAR has a fault based on the point cloud data by using a LIDAR malfunction detection model when the number of points is greater than or equal to the point count threshold, wherein the LIDAR malfunction detection model is a pre-trained model based on a normal dataset and at least one LIDAR-abnormal dataset, the normal dataset includes preset statistics and point cloud data acquired from the LIDAR in a normal state, and the LIDAR-abnormal dataset includes point cloud data generated based on the normal dataset.

According to an aspect of the present disclosure, there is provided a method for generating data used for training of a LIDAR malfunction detection model, including: acquiring a normal dataset; and generating at least one or more LIDAR-abnormal dataset based on the normal dataset.

According to an aspect of the present disclosure, there is provided a method for detecting malfunction of a LIDAR, including: acquiring point cloud data from the LIDAR; determining whether the number of points included in the point cloud data is less than a point count threshold; determining whether a duration taken to receive the point cloud data is less than a point cloud data reception time threshold when the number of points is greater than or equal to the point count threshold; not increasing a timer error accumulation count when the duration taken to receive the point cloud data is less than the point cloud data reception time threshold, and increasing the timer error accumulation count by 1 when the duration taken to receive the point cloud data is greater than or equal to the point cloud data reception time threshold; determining whether the timer error accumulation count is greater than a timer error accumulation count threshold; and determining that there is a fault in acquiring the point cloud data from the LIDAR, rather than a fault in the LIDAR when the timer error accumulation count is greater than the timer error accumulation count threshold.

According to an embodiment of the present disclosure, by classifying and generating the LIDAR-abnormal dataset into a plurality of types, it is possible to detect a malfunction of the LIDAR in various environments.

According to an embodiment of the present disclosure, the accuracy of the LIDAR malfunction detection using the LIDAR malfunction detection model may be increased by classifying and generating the LIDAR-abnormal dataset into various types, and training the LIDAR malfunction detection model based on the LIDAR-abnormal dataset generated accordingly.

According to an embodiment of the present disclosure, even if there is no actual data, by using the LIDAR-abnormal dataset generated based on the normal dataset for model training, it is possible to detect the malfunction of the LIDAR even in a situation in which the LIDAR does not operate.

According to an embodiment of the present disclosure, even if there is no actual data, the cost may be reduced by using the LIDAR-abnormal dataset generated based on the normal dataset for model training.

The effects of the present disclosure are not limited to the effects mentioned above, and other effects not mentioned will be clearly understood by a person skilled in the art from the following description.

### BRIEF DESCRIPTION OF THE DRAWINGS

FIG. 1A is a flowchart schematically showing a method for detecting malfunction of a LIDAR according to an embodiment of the present disclosure.
FIG. 1B is a flowchart schematically showing a method for detecting malfunction of a LIDAR according to an embodiment of the present disclosure.
FIG. 2 is a diagram showing a class configuration of training data according to an embodiment of the present disclosure.
FIG. 3 is an illustrative diagram showing normal data according to an embodiment of the present disclosure.
FIG. 4 is a flowchart showing a method for generating first type LIDAR-abnormal data in training data according to an embodiment of the present disclosure.
FIG. 5A is an illustrative diagram showing normal data according to an embodiment of the present disclosure.
FIG. 5B is an illustrative diagram showing first type LIDAR-abnormal data according to an embodiment of the present disclosure.
FIG. 6 is a flowchart showing a method of generating second type LIDAR-abnormal data in training data according to an embodiment of the present disclosure.
FIG. 7A is an illustrative diagram showing normal data according to an embodiment of the present disclosure.
FIG. 7B is an illustrative diagram showing second type LIDAR-abnormal data according to an embodiment of the present disclosure.
FIG. 8 is a flowchart showing a method for generating third type LIDAR-abnormal data in training data according to an embodiment of the present disclosure.
FIG. 9A is an illustrative diagram showing normal data according to an embodiment of the present disclosure.
FIG. 9B is an illustrative diagram showing third type LIDAR-abnormal data according to an embodiment of the present disclosure.
FIG. 10 is a flowchart showing a preprocessing method according to an embodiment of the present disclosure.
FIG. 11A is an illustrative diagram showing a preprocessing result for normal data according to an embodiment of the present disclosure.
FIG. 11B is an illustrative diagram showing preprocessing results for first type LIDAR-abnormal data according to an embodiment of the present disclosure.
FIG. 12 is a flowchart schematically showing a LIDAR malfunction detection algorithm according to an embodiment of the present disclosure.
FIG. 13 is a flowchart showing a LIDAR malfunction detection algorithm according to an embodiment of the present disclosure.
FIG. 14 is a flowchart showing a LIDAR malfunction detection algorithm according to an embodiment of the present disclosure.
FIG. 15 is a block diagram schematically showing an example computing device that may be used to implement the apparatus and methods described in this disclosure.

### DETAILED DESCRIPTION

Hereinafter, some embodiments of the present disclosure will be described in detail with reference to illustrative drawings. It should be noted that, in adding reference numerals to the components in each figure, the same components have the same numerals as much as possible even if they are indicated in other figures. In addition, in describing the present disclosure, when it is determined that a specific description of a related known configuration or function may obscure the gist of the present disclosure, a detailed description thereof will be omitted.

In describing the components of the embodiments according to the present disclosure, reference numerals such as first, second, i), ii), a), and b) may be used. These symbols are merely used to distinguish the components from other components, and the nature, sequence, order, and the like of the components are not limited by the symbols. In the specification, when a part 'includes' or 'contains' a certain component, it means that other components may be further included instead of excluding other components unless explicitly stated to the contrary.

The detailed description set forth below in conjunction with the appended drawings is intended to describe exemplary embodiments of the present disclosure and is not intended to represent the only embodiments in which the present disclosure may be practiced.

Fault, breakdown, and malfunction may be used in a similar sense in the present disclosure. Thus, a method and an apparatus for detecting malfunction of LIDAR may be represented as a method and an apparatus for detecting failure of LIDAR or a method and an apparatus for detecting fault of LIDAR. In the present disclosure, detection and diagnosis may be used in a similar sense. The method and apparatus for detecting malfunction in LIDAR may thus be expressed as a method and an apparatus for diagnosing malfunction in the LIDAR. Further, the method and apparatus for detecting malfunction of the LIDAR may be expressed as a method and an apparatus for diagnosing failure of LIDAR, or the like.

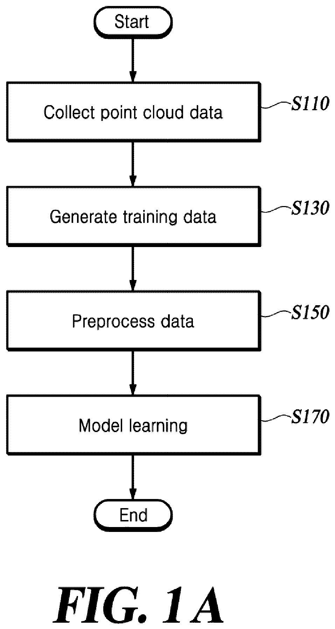

FIG. 1A is a flowchart schematically showing a method for detecting malfunction of a LIDAR according to an embodiment of the present disclosure.

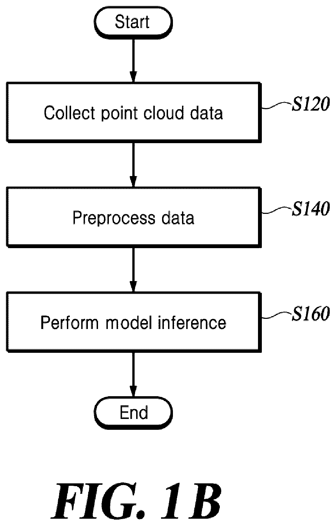

FIG. 1B is a flowchart schematically showing a method for detecting malfunction of a LIDAR according to an embodiment of the present disclosure.

Referring to FIG. 1A, The apparatus for detecting malfunction of LIDAR according to an embodiment of the present disclosure may collect point cloud data (S110), generate training data based on the collected data (S130), preprocess the training data (S150), and train the LIDAR malfunction detection model based on the preprocessed training data (S170). The process of preprocessing the training data (S150) may be omitted. When the process of preprocessing the training data is omitted, the process of training the LIDAR malfunction detection model based on the preprocessed training data may be a process of training a LIDAR malfunction detection model based on the generated training data.

Referring to FIG. 1B, The apparatus for detecting malfunction of LIDAR according to an embodiment of the present disclosure may collect point cloud data (S120), preprocess the data (S140), and determine whether the LIDAR has fault using a trained LIDAR malfunction detection model (S160). The preprocessing the data (S140) may be omitted.

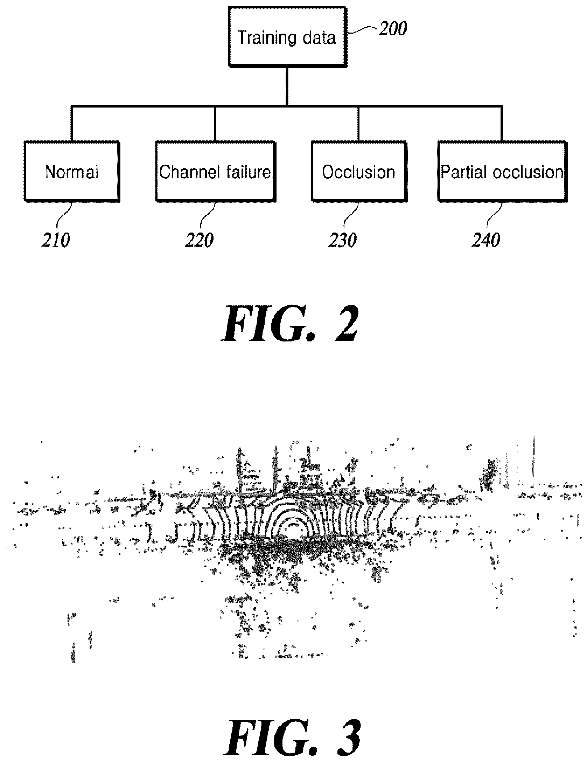

The point cloud data may be acquired using a LIDAR. The point cloud data may include normal data. The normal data will be described in detail below with reference to FIG. 3.

FIG. 2 is a diagram showing a class configuration of training data according to an embodiment of the present disclosure

The training data 200 may include a normal dataset 210 and an abnormal dataset. The abnormal dataset may be classified into at least one or more types of datasets based on the type of failure of the LIDAR that actually occurs. The failure types of the LIDAR may be classified into three types. The abnormal dataset may include a first type LIDAR-abnormal dataset, a second type LIDAR-abnormal dataset, and a third type LIDAR-abnormal dataset. The first type LIDAR-abnormal dataset may be a channel-fault type LIDAR-abnormal dataset 220. The second type LIDAR-abnormal dataset may be an occlusion type LIDAR-abnormal dataset 230. The third type LIDAR-abnormal dataset may be a partial occlusion type LIDAR-abnormal dataset 240. That is, the abnormal dataset may include a channel failure type LIDAR-abnormal dataset 220, the occlusion type LIDAR-abnormal dataset 230, and the partial occlusion type LIDAR-abnormal dataset 240.

The channel failure type LIDAR-abnormal dataset 220 may be a dataset that aggregates channel failure type LIDAR-abnormal data. The channel failure type LIDAR-abnormal data may be data indicating a case where all or part of the LIDAR channel is lost. The channel failure type LIDAR-abnormal data may be point cloud data collected using the LIDAR in a situation where a part of the LIDAR channel is lost, that is, synthetic point cloud data simulating actual point cloud data. Therefore, the channel failure type LIDAR-abnormal dataset 220 may be point cloud data collected by using the LIDAR in a situation where a part of the LIDAR channel is lost, that is, data acquired by aggregating synthetic point cloud data simulating actual point cloud data. The at least one point cloud data may be data collected at different times.

The occlusion type LIDAR-abnormal dataset 230 may be aggregated data of occlusion type data. The occlusion type LIDAR-abnormal data may be data indicating a case where the point cloud data is not reflected and disappears in all of yaw angles of 0 to 360° with respect to the z-axis of the LIDAR. The occlusion type LIDAR-abnormal data may be point cloud data collected by using the LIDAR in a situation where the point cloud data is not reflected and disappears in all of yaw angles of 0 to 360° with respect to the z-axis of the LIDAR, that is, synthetic point cloud data simulating actual point cloud data. Therefore, the occlusion type LIDAR-abnormal dataset 230 may be point cloud data collected using the LIDAR in a situation in which point cloud data is not reflected and disappears in all of yaw angles of 0 to 360° with respect to the z-axis of the LIDAR, that is, data acquired by aggregating synthetic point cloud data simulating actual point cloud data. The at least one point cloud data may be data collected at different times.

The partial occlusion type LIDAR-abnormal dataset 240 may be data that aggregates the partial occlusion type data. The partial occlusion type LIDAR-abnormal data may be data indicating a case in which the point cloud data is not reflected and disappears in some of yaw angles 0 to 360° with respect to the z-axis of the LIDAR. The partial occlusion type LIDAR-abnormal data may be point cloud data collected by using the LIDAR in a situation where the point cloud data is not reflected and disappears in some of yaw angles of 0 to 360° with respect to the z-axis of the LIDAR, that is, synthetic point cloud data simulating actual point cloud data. Therefore, the partial occlusion type LIDAR-abnormal dataset 240 may be point cloud data collected by using the LIDAR in a situation in which point cloud data is not reflected and disappears in some of yaw angles of 0 to 360° with respect to the z-axis of the LIDAR, that is, data acquired by aggregating synthetic point cloud data simulating actual point cloud data. The at least one point cloud data may be data collected at different times.

FIG. 3 is an illustrative diagram showing normal data according to an embodiment of the present disclosure.

The normal data may be point cloud data collected using a LIDAR in a normal state, such as a LIDAR without malfunction or a LIDAR without fault. The normal dataset may be aggregated data of at least one or more point cloud data collected using a normal state LIDAR, such as the LIDAR without malfunction or the LIDAR without fault. The at least one point cloud data may be data collected at different times.

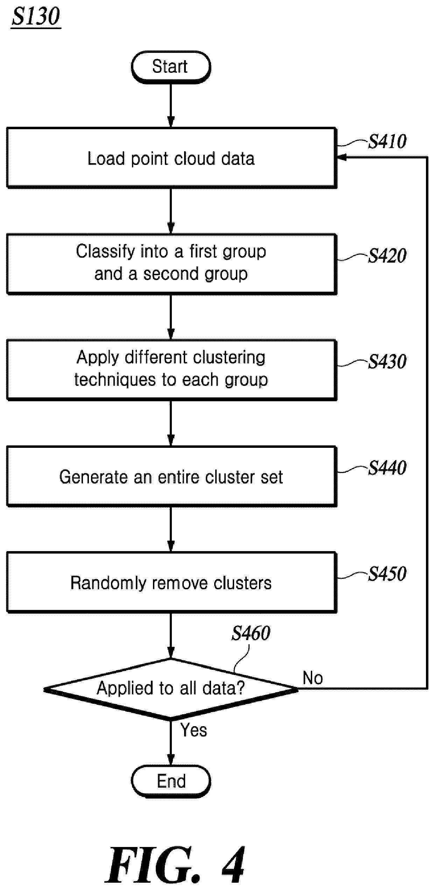

FIG. 4 is a flowchart showing a method for generating first type LIDAR-abnormal data in training data according to an embodiment of the present disclosure.

The first type LIDAR-abnormal data may be channel failure type LIDAR-abnormal data.

The apparatus for detecting malfunction of LIDAR according to an embodiment of the present disclosure loads point cloud data (S410). The point cloud data may be normal data. The normal data may be one point cloud data of at least one or more point cloud data included in the normal dataset.

The apparatus for detecting malfunction of LIDAR according to an embodiment of the present disclosure classifies the points into a first group and a second group based on a preset rule (S420). The points may be points included in the point cloud data fetched in operation S410. The first group and the second group may be spatially separated.

The preset rule may be a rule of classifying the points included in the z-axis range from "ground" (the height of the LIDAR-the height of the vehicle) to "ground" (height of the LIDAR+height of the vehicle) into a first group, and the points included in other z-axis ranges into a second group, assuming that the LIDAR is installed on the upper portion of the vehicle. The preset rule may vary depending on various factors, such as which LIDAR channel collects the point cloud data. The preset rule may be determined experimentally under certain conditions.

The apparatus for detecting malfunction of LIDAR according to an embodiment of the present disclosure applies different clustering techniques to the first group and the second group (S430).

The clustering technique applied to the first group may be a K-means clustering technique. The clustering technique applied to the second group may be a DBSCAN clustering technique.

In the case of points included in the first group, for example, in the z-axis range from "ground" (z value at the point where the LIDAR is installed-front height of the vehicle) to "ground" (Z value at the point at which the LIDAR is attached+front height of the vehicles), since the points are often distributed at different heights for each channel of the LIDAR, a method of applying the K-means clustering technique, which is a distance-based clustering technique for clustering adjacent points, may be effective.

In the case of a second group, for example, a point that is not included in the z-axis range from "ground" (z value at the point where the LIDAR is installed-the height of the vehicle) to "ground" (Z value at the point at which the LIDAR is attached+the height of the car), a method of applying a DBSCAN clustering technique, which is a density-based clustering technique, may be effective. i) In the case of points having a z value lower than "ground" (z value at the point where the LIDAR is installed-the height of the vehicle), since the z values are all 0 without being distributed at different heights for each channel of the LIDAR, and ii) in the case of points with a z value higher than "ground", since the z-axis interval for each channel of a LIDAR becomes sparse, a method of applying a DBSCAN clustering technique, which is a density-based clustering technique, may be effective.

The LIDAR may be installed at the highest position of the vehicle roof. In this case, the z value at the point where the LIDAR is installed may be the same as the total height of the vehicle. In this case, "ground" (z value at the point where the LIDAR is installed-the height of the vehicle) may be z=0. The "ground" (the z value at the point where the LIDAR is installed+the vehicle height) may be z= (the vehicle height)*2. The height of the vehicle may be used in the same sense as the height of the vehicle.

As a result of applying different clustering techniques to the first group and the second group, the first cluster and the second cluster may be generated. The first cluster may be a result of applying the K-means clustering technique to the first group. The second cluster may be a result of applying the DBSCAN clustering technique to the second group.

The apparatus for detecting malfunction of LIDAR according to an embodiment of the present disclosure generates an entire cluster set (S440). The entire cluster set may be data acquired by merging the first cluster and the second cluster.

The apparatus for detecting malfunction of LIDAR according to an embodiment of the present disclosure randomly removes a cluster based on a preset ratio (S450). The cluster may be a cluster included in the entire cluster set generated as a result of S440. Generally, when the LIDAR has fault, the number of points included in the point cloud data measured by the LIDAR is reduced. Thus, the method according to the present disclosure may simulate point cloud data that may be measured when the LIDAR has fault, by randomly removing a cluster, i.e., multiple points.

The preset ratio may be a ratio set based on the number of points of all data, that is, data having the smallest number of points among all normal data.

The apparatus for detecting malfunction of LIDAR according to an embodiment of the present disclosure may generate first-type LIDAR-abnormal data by randomly removing a cluster.

The apparatus for detecting malfunction of LIDAR according to an embodiment of the present disclosure determines whether the operations S410 to S450 are applied to all data (S460). The data may be normal data. The normal data may be point cloud data included in the normal dataset. That is, the Apparatus for detecting malfunction of LIDAR according to an embodiment of the present disclosure may determine whether the operations S410 to S450 are applied to all normal point cloud data included in the normal dataset.

If the operations S410 to S450 are not applied to any data, the method according to an embodiment of the present disclosure returns to the operation of S410. The apparatus for detecting malfunction of LIDAR according to an embodiment of the present disclosure may generate a first-type LIDAR-abnormal dataset by applying operations S410 to S450 to all data.

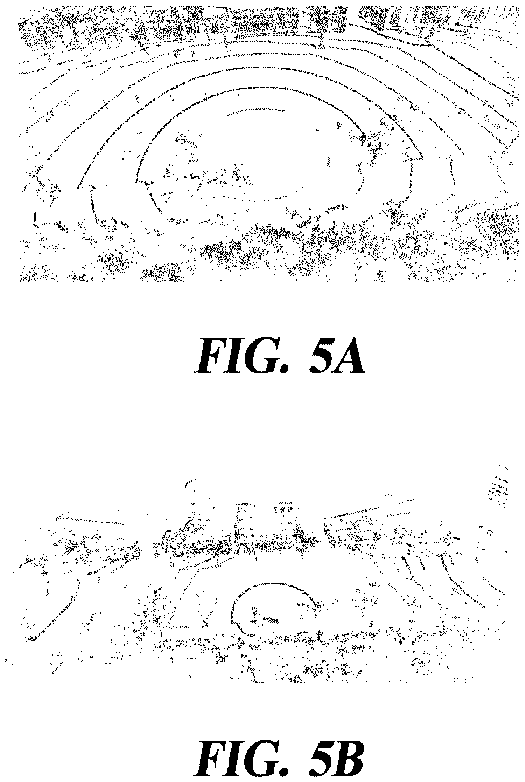

FIG. 5A is an illustrative diagram showing normal data according to an embodiment of the present disclosure.

FIG. 5B is an illustrative diagram showing first type LIDAR-abnormal data according to an embodiment of the present disclosure.

The apparatus for detecting malfunction of LIDAR according to an embodiment of the present disclosure may generate first type LIDAR-abnormal data as illustrated in FIG. 5B, based on the normal data as illustrated in FIGS. 5A, by performing the operations S410 to S460. A first type LIDAR-abnormal data as illustrated in FIG. 5B may be synthetic data that simulates actual data.

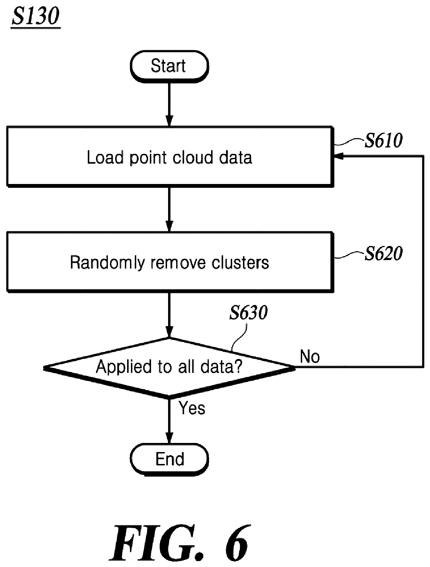

FIG. 6 is a flowchart showing a method of generating second type LIDAR-abnormal data in training data according to an embodiment of the present disclosure.

The second type LIDAR-abnormal data may be the occlusion type LIDAR-abnormal data.

The apparatus for detecting malfunction of LIDAR according to an embodiment of the present disclosure loads point cloud data (S610). The point cloud data may be normal data. The normal data may be one point cloud data of at least one or more point cloud data included in the normal dataset.

The apparatus for detecting malfunction of LIDAR according to an embodiment of the present disclosure randomly removes points based on a preset ratio (S620). The point may be a point included in the point cloud data fetched in operation S610. Generally, when the LIDAR has fault, the number of points included in the point cloud data measured by the LIDAR is reduced. Thus, the method according to the present disclosure may simulate point cloud data that may be measured when the LIDAR has fault, by randomly removing points.

The preset ratio may be a ratio set based on the number of points of all data, that is, data having the smallest number of points among all normal data.

The apparatus for detecting malfunction of LIDAR according to an embodiment of the present disclosure may generate second type LIDAR-abnormal data by randomly removing points.

The apparatus for detecting malfunction of LIDAR according to an embodiment of the present disclosure determines whether the operations S610 and S620 are applied to all data (S630). The data may be normal data. The normal data may be point cloud data included in the normal dataset. That is, the Apparatus for detecting malfunction of LIDAR according to an embodiment of the present disclosure may determine whether the operations S610 and S620 are applied to all normal point cloud data included in the normal dataset.

If the operations S610 and S620 are not applied to any of the data, the method according to an embodiment of the present disclosure returns to the process of S610. The apparatus for detecting malfunction of LIDAR according to an embodiment of the present disclosure may generate a second type LIDAR-abnormal dataset by applying the operations S610 and S620 to all data.

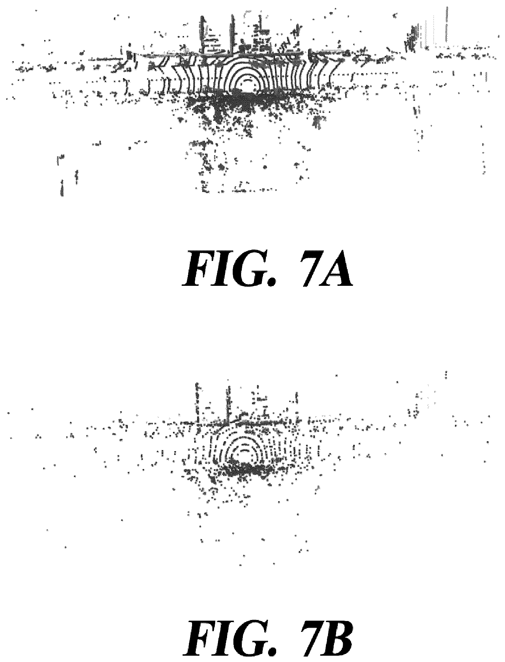

FIG. 7A is an illustrative diagram showing normal data according to an embodiment of the present disclosure.

FIG. 7B is an illustrative diagram showing second type LIDAR-abnormal data according to an embodiment of the present disclosure.

The apparatus for detecting malfunction of LIDAR according to an embodiment of the present disclosure may generate second type LIDAR-abnormal data as illustrated in FIG. 7B, based on the normal data as illustrated in FIGS. 7A, by performing operations S610 to S630. A second type LIDAR as illustrated in FIG. 7B- The abnormal data may be synthetic data that simulates actual data.

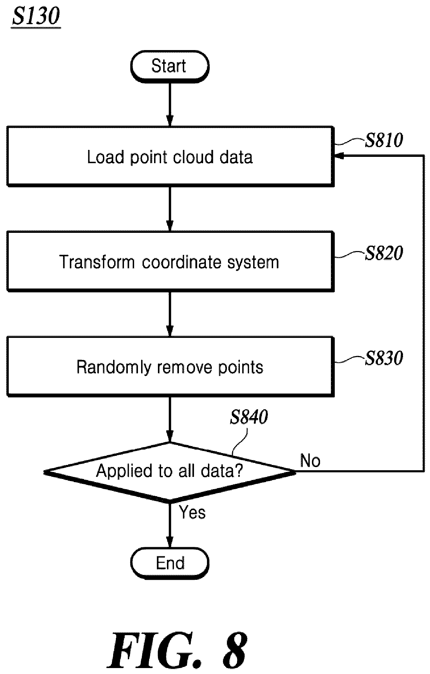

FIG. 8 is a flowchart showing a method for generating third type LIDAR-abnormal data according to an embodiment of the present disclosure.

The third type LIDAR-abnormal data may be the partial occlusion type LIDAR-abnormal data.

The apparatus for detecting malfunction of LIDAR according to an embodiment of the present disclosure loads point cloud data (S810). The point cloud data may be normal data. The normal data may be one point cloud data of at least one or more point cloud data included in the normal dataset.

The apparatus for detecting malfunction of LIDAR according to an embodiment of the present disclosure converts a coordinate system of point cloud data from a Cartesian coordinate system to a cylindrical coordinate system (S820).

The apparatus for detecting malfunction of LIDAR according to an embodiment of the present disclosure randomly removes points based on a preset rule and a preset ratio (S830). Generally, when a LIDAR has fault, the number of points included in the point cloud data measured by the LIDAR is reduced. Thus, the method according to the present disclosure may simulate point cloud data that may be measured when a LIDAR has fault, by randomly removing points.

The preset ratio may be a ratio set based on the number of points of all data, that is, data having the smallest number of points among all normal data.

The preset rule may be a rule for classifying the points into several sub-populations. For example, the preset rule may be a rule for setting the angular range and the z-axis range to classify the points into several sub-populations. Specifically, the angle range may be one of a yaw angle of 0 to 360° divided by 30° into 12 sections based on the z-axis of the LIDAR. The Z-axis range may be one of the z-axis divided by 10 intervals in 0.1 units, assuming the z-axis length on the point cloud data is 0 to 1. According to this angular range and z-axis range, the points may be classified into a total of 120 sub-populations. The apparatus for detecting malfunction of LIDAR according to an embodiment of the present disclosure removes points based on a preset ratio from a first sub-population to a 120th sub-population.

The apparatus for detecting malfunction of LIDAR according to an embodiment of the present disclosure may generate third-type LIDAR-abnormal data by merging points included in all sub-populations included in one data, for example, the first sub-population to the 120th sub-population, after removing the points.

The apparatus for detecting malfunction of LIDAR according to an embodiment of the present disclosure determines whether the operations S810 to S830 are applied to all data (S840). The data may be normal data. The normal data may be point cloud data included in the normal dataset. That is, the apparatus for detecting malfunction of LIDAR according to an embodiment of the present disclosure may determine whether the operations S810 to S830 are applied to all normal point cloud data included in the normal dataset.

If the operations S810 to S830 are not applied to any data, the method according to an embodiment of the present disclosure returns to the process of S810. The apparatus for detecting malfunction of LIDAR according to an embodiment of the present disclosure may generate a third type LIDAR-abnormal dataset by applying the operations S810 to S830 to all data.

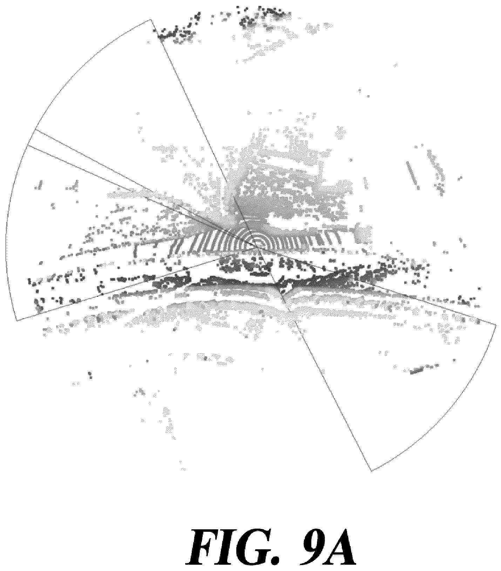

FIG. 9A is an illustrative diagram showing normal data according to an embodiment of the present disclosure.

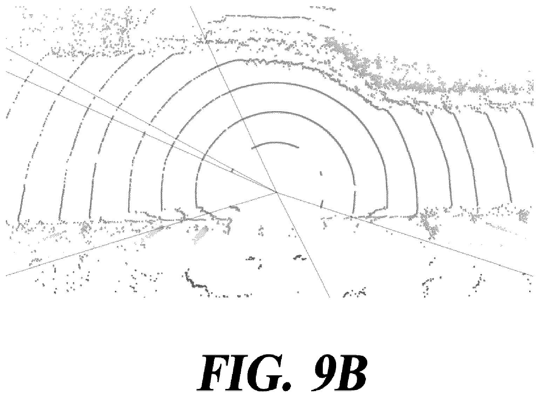

FIG. 9B is an illustrative diagram showing third type LIDAR-abnormal data according to an embodiment of the present disclosure.

The apparatus for detecting malfunction of LIDAR according to an embodiment of the present disclosure may generate first type LIDAR-abnormal data as illustrated in FIG. 9B, based on the normal data as illustrated in FIGS. 9A, by performing operations S810 to S840. The first type of LIDAR-abnormal data, such as illustrated in FIG. 9B, may be synthetic data that simulates actual data.

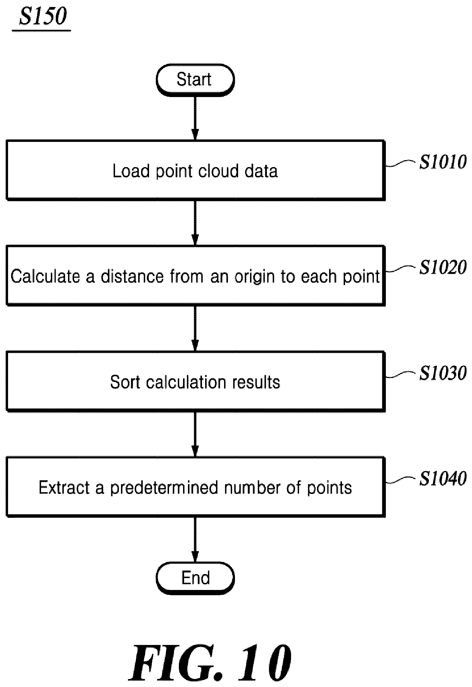

FIG. 10 is a flowchart showing a preprocessing method according to an embodiment of the present disclosure.

The apparatus for detecting malfunction of LIDAR according to an embodiment of the present disclosure loads point cloud data (S1010). The apparatus for detecting malfunction of LIDAR according to an embodiment of the present disclosure may acquire point cloud data and the number of points to be selected. The point cloud data may include at least one or more points.

The apparatus for detecting malfunction of LIDAR according to an embodiment of the present disclosure calculates a distance from an origin to each point (S1020). The apparatus for detecting malfunction of LIDAR according to an embodiment of the present disclosure may calculate a distance from an origin on a LIDAR coordinate system to each point. The origin on the LIDAR coordinate system may mean the location where the LIDAR is installed. The apparatus for detecting malfunction of LIDAR according to an embodiment of the present disclosure may store the calculated result in the array.

The apparatus for detecting malfunction of LIDAR according to an embodiment of the present disclosure may sort calculation results (S1030). The apparatus for detecting malfunction of LIDAR according to an embodiment of the present disclosure may sort the values stored in the array in an ascending order.

The apparatus for detecting malfunction of LIDAR according to an embodiment of the present disclosure extracts a predetermined number of points (S1040). The apparatus for detecting malfunction of LIDAR according to an embodiment of the present disclosure may select points corresponding to the values included in the result stored in the different array. The particular number may be the number of points to select. The apparatus for detecting malfunction of LIDAR according to an embodiment of the present disclosure may select points corresponding to values included in a result stored in another arrangement. The apparatus for detecting malfunction of LIDAR according to an embodiment of the present disclosure may reconstruct point cloud data consisting of selected points.

The apparatus for detecting malfunction of LIDAR according to an embodiment of the present disclosure may extract and sample only some points close to the LIDAR installation location from among all the points of the point cloud data by performing operations S 1010 to S1040.

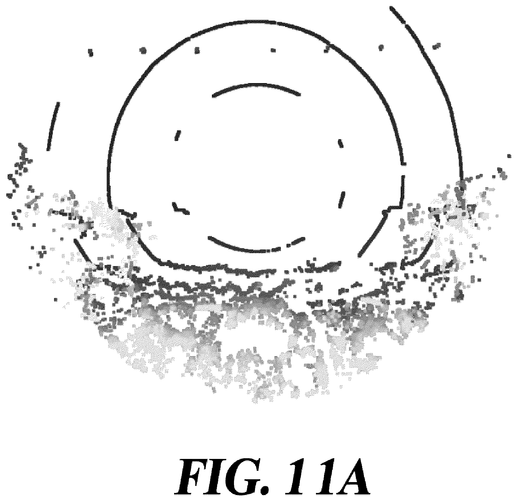

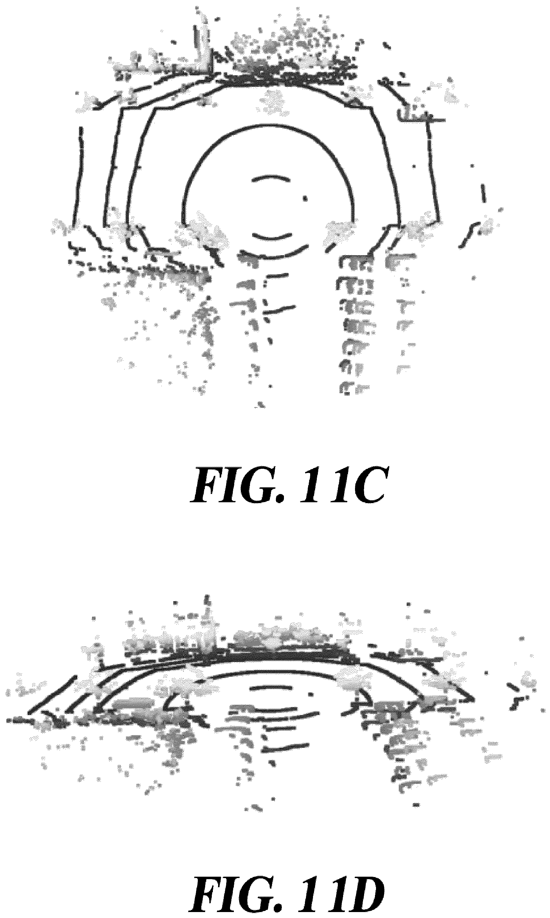

FIG. 11A is an illustrative diagram showing a preprocessing result for normal data according to an embodiment of the present disclosure.

The apparatus for detecting malfunction of LIDAR according to an embodiment of the present disclosure may generate a preprocessing result for normal data as illustrated in FIG. 11A by performing operations S1010 to S1040. The preprocessing result may be point cloud data.

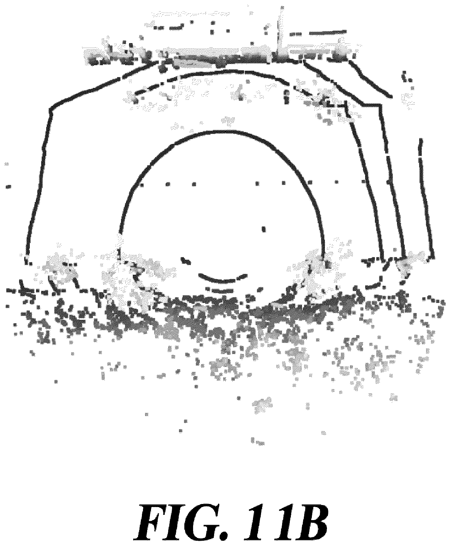

FIG. 11B is an illustrative diagram showing preprocessing results for first type LIDAR-abnormal data according to an embodiment of the present disclosure.

The apparatus for detecting malfunction of LIDAR according to an embodiment of the present disclosure may generate a preprocessing result for the first type LIDAR-abnormal data as illustrated in FIG. 11B by performing operations S1010 to S1040. The first type LIDAR-abnormal data may be generated by the process of FIG. 4 based on the normal data. The preprocessing result may be point cloud data.

As illustrated in FIGS. 1A and 1B, the preprocessing S140, S150 may be performed before the model training S170 process or before the model inference S160 process. Specifically, the preprocessing S150 may be performed before the model training S170 process, and the preprocessing S140 process may be performed prior to the model inference S160 process. The preprocessing S140 and the preprocessing S150 may be basically the same process, but the preprocessing target and the preprocessing purpose may be different processes.

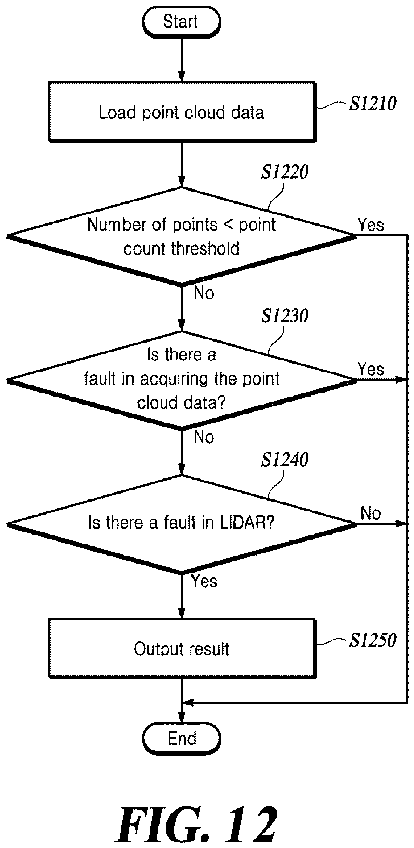

FIG. 12 is a flowchart schematically showing a LIDAR malfunction detection algorithm according to an embodiment of the present disclosure.

The apparatus for detecting malfunction of LIDAR according to an embodiment of the present disclosure loads point cloud data (S1210).

The apparatus for detecting malfunction of LIDAR according to an embodiment of the present disclosure determines whether the number of points of the retrieved point cloud data is less than a point count threshold (S1220). Generally, when the LIDAR has fault, the number of points included in the point cloud data measured by the LIDAR is reduced. Therefore, when the number of points of the point cloud data is smaller than a preset threshold, malfunction of the LIDAR may be suspected.

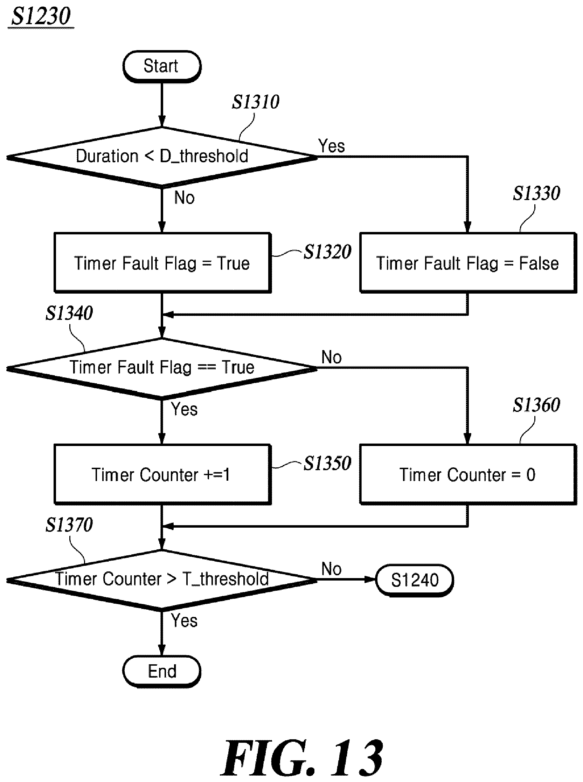

When the number of points is greater than or equal to the point count threshold, the apparatus for detecting malfunction of LIDAR according to an embodiment of the present disclosure determines whether there is a fault in acquiring point cloud data (S1230). An algorithm for determining whether there is a fault in acquiring point cloud data will be described in detail below with reference to FIG. 13.

When it is determined that there is no fault in acquiring the point cloud data, the apparatus for detecting malfunction of LIDAR according to an embodiment of the present disclosure determines whether there is a fault in the LIDAR (S1240). The apparatus for detecting malfunction of LIDAR according to an embodiment of the present disclosure may determine whether a LIDAR has a fault by using a pre-trained LIDAR malfunction detection model. The operation S1240 of determining whether the LIDAR is fault by using the LIDAR malfunction detection model may be the same operation as the operation of the model inference S160 of FIG. 1B.

The LIDAR malfunction detection model according to an embodiment of the present disclosure may be an artificial intelligence model trained by training data including a normal dataset and a type-specific LIDAR-abnormal dataset. The artificial intelligence model may be implemented as a graph convolution network (3D-GCN). Since the apparatus for detecting malfunction of LIDAR according to an embodiment of the present disclosure detects malfunction of the LIDAR based on the density of the point cloud data, in detecting malfunction of the LIDAR, a relationship among points included in the point cloud data is important for the apparatus for detecting malfunction of the LIDAR according to an embodiment of the present disclosure. Since the 3D-GCN trains in consideration of a distance between adjacent points by using the GCN, it is possible to train a relationship between points. Thus, the 3D-GCN is a neural network suitable for implementing a LIDAR malfunction detection model according to an embodiment of the present disclosure.

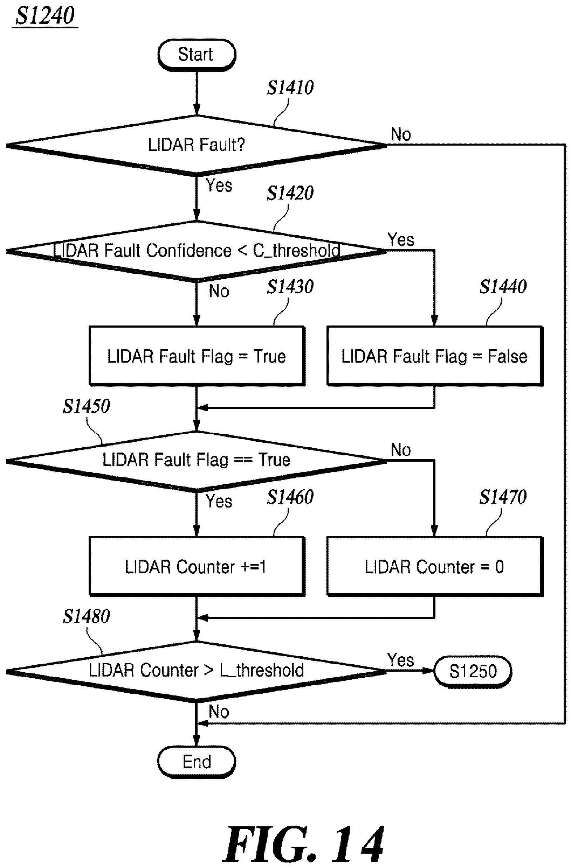

The apparatus for detecting malfunction of LIDAR according to an embodiment of the present disclosure may determine whether there is a fault in the LIDAR by using a pre-trained LIDAR malfunction detection model, and then additionally verify a result inferred by the LIDAR malfunction detection model. A process of verifying a result inferred by a LIDAR malfunction detection model by the apparatus for detecting malfunction of LIDAR according to an embodiment of the present disclosure will be described in detail below with reference to FIG. 14.

When it is determined that the LIDAR has fault, the apparatus for detecting malfunction of LIDAR according to an embodiment of the present disclosure outputs a result (S1250). The result may be output via an output interface. When the apparatus for detecting malfunction of LIDAR according to an embodiment of the present disclosure is apparatus that detects malfunction with respect to a LIDAR used in an autonomous vehicle, the apparatus for detecting malfunction of LIDAR may output a result by transmitting a signal to another apparatus for control of the autonomous vehicle.

The apparatus for detecting malfunction of LIDAR according to an embodiment of the present disclosure may detect malfunction of the LIDAR by performing operations S1210 to S1240, and may output a result by performing operation S1250 when detecting malfunction of LIDAR.

FIG. 13 is a flowchart showing a LIDAR malfunction detection algorithm according to an embodiment of the present disclosure.

Referring to FIG. 13, when the number of points of the loaded point cloud data is greater than or equal to the point count threshold, the apparatus for detecting malfunction of LIDAR according to an embodiment of the present disclosure determines whether the duration duration taken to receive the point cloud data is less than the point cloud data reception time threshold (D_threshold) (S 1310).

The apparatus for detecting malfunction of LIDAR according to an embodiment of the present disclosure sets the flag for timer error accumulation determination (Timer Fault Flag) to true, when the duration taken to receive the point cloud data is greater than or equal to the point cloud data reception time threshold (S1320).

The apparatus for detecting malfunction of LIDAR according to an embodiment of the present disclosure sets the flag for timer error accumulation determination (Timer Fault Flag) to false, when the duration taken to receive the point cloud data is less than the point cloud data reception time threshold (S1330).

The apparatus for detecting malfunction of LIDAR according to an embodiment of the present disclosure determines whether the flag for timer error accumulation determination (Timer Fault Flag) is true (S1340).

The apparatus for detecting malfunction of LIDAR according to an embodiment of the present disclosure increases the timer error accumulation count (Timer Counter) by 1, when it is determined that the flag for timer error accumulation determination (Timer Fault Flag) is true (S1350).

The apparatus for detecting malfunction of LIDAR according to an embodiment of the present disclosure does not increase the timer error accumulation count (Timer Counter), when it is determined that the flag for timer error accumulation determination (Timer Fault Flag) is false, that is, is not true (S1360).

The apparatus for detecting malfunction of LIDAR according to an embodiment of the present disclosure determines whether the timer error accumulation count (Timer Counter) is greater than the timer error accumulation count threshold (T _threshold) (S1370).

The apparatus for detecting malfunction of LIDAR according to an embodiment of the present disclosure determines a timer fault when the timer error accumulation count (Timer Counter) is greater than the timer error accumulation count threshold (T_threshold). In other words, it is determined that there is a fault in acquiring the point cloud from the LIDAR, rather than a fault in the LIDAR. Examples of cases in which a fault occurs in acquiring the point cloud from the LIDAR may include for example, a case in which a power switch of the apparatus for detecting malfunction of LIDAR is turned off, a case in which an electric wire connected to the apparatus for detecting malfunction of LIDAR is disconnected, a case in which a program executed in the apparatus for detecting malfunction of LIDAR is unexpectedly terminated, and a case in which an associative device included in the apparatus for detecting malfunction of LIDAR is overloaded.

When the timer error accumulation count (Timer Counter) is less than or equal to the timer error accumulation count threshold (T_threshold), the apparatus for detecting malfunction of LIDAR according to an embodiment of the present disclosure determines that there is no fault in acquiring the point cloud, and performs operation S1240.

FIG. 14 is a flowchart showing a LIDAR malfunction detection algorithm according to an embodiment of the present disclosure.

Referring to FIG. 14, apparatus for detecting malfunction of LIDAR according to an embodiment of the present disclosure may determine whether a LIDAR has a fault by using the LIDAR malfunction detection model as in operation S1410, and then verify a result inferred by the LIDAR malfunction detection model as in operations S 1420 to S1480. That is, the apparatus for detecting malfunction of LIDAR according to an embodiment of the present disclosure may further perform operations S1420 to S1480 to verify the result inferred by the LIDAR malfunction detection model.

The apparatus for detecting malfunction of LIDAR according to an embodiment of the present disclosure determines whether there is a fault in the LIDAR using a pre-trained LIDAR malfunction detection model (S1410). The determining whether there is a fault in the LIDAR using the LIDAR malfunction detection model (S1410) may be the same process as the process of determining whether the LIDAR has fault using the LIDAR malfunction detection model of FIG. 12 (S1240) and the process of model inference (S160) of FIG. 1B.

When it is determined that the LIDAR has fault by using the LIDAR malfunction detection model, the apparatus for detecting malfunction of LIDAR according to an embodiment of the present disclosure determines whether the confidence of LIDAR malfunction detection model (LIDAR Fault Confidence) is less than a LIDAR malfunction detection model confidence threshold (C _threshold) (S1420).

Confidence is an indicator of the accuracy of the result inferred by the artificial intelligence model. The confidence may be a confidence score. Confidence may be a value between 0 and 1. Confidence may be generated by an artificial intelligence model.

The apparatus for detecting malfunction of LIDAR according to an embodiment of the present disclosure sets the flag for LIDAR error accumulation determination (LIDAR Fault Flag) to true, when the confidence of LIDAR malfunction detection model is greater than or equal to the LIDAR malfunction detection model confidence threshold (S1430).

The apparatus for detecting malfunction of LIDAR according to an embodiment of the present disclosure sets the flag for LIDAR error accumulation determination (LIDAR Fault Flag) to false, when the confidence of LIDAR malfunction detection model is less than the LIDAR malfunction detection model confidence threshold (S1440).

The apparatus for detecting malfunction of LIDAR according to an embodiment of the present disclosure determines whether the flag for LIDAR error accumulation determination (LIDAR Fault Flag) is true (S1450).

The apparatus for detecting malfunction of LIDAR according to an embodiment of the present disclosure increases the LIDAR error accumulation count (LIDAR Counter) by 1, when it is determined that the flag for LIDAR error accumulation determination (LIDAR Fault Flag) is true (S1460).

The apparatus for detecting malfunction of LIDAR according to an embodiment of the present disclosure does not increase the LIDAR error accumulation count (LIDAR Counter), when it is determined that the flag for LIDAR error accumulation determination (LIDAR Fault Flag) is false, that is, not true (S1470).

The apparatus for detecting malfunction of LIDAR according to an embodiment of the present disclosure determines whether the LIDAR error accumulation count (LIDAR Counter) is greater than the LIDAR error accumulation count threshold (L _threshold) (S1480).

When the LIDAR error accumulation count (LIDAR Counter) is greater than the LIDAR error accumulation count threshold (L_threshold), the apparatus for detecting malfunction of LIDAR according to an embodiment of the present disclosure determines that LIDAR fault has occurred, and performs operation S1250. In other words, it is ultimately determined that the LIDAR has fault. That is, it is determined that the result inferred by the LIDAR malfunction detection model is correct.

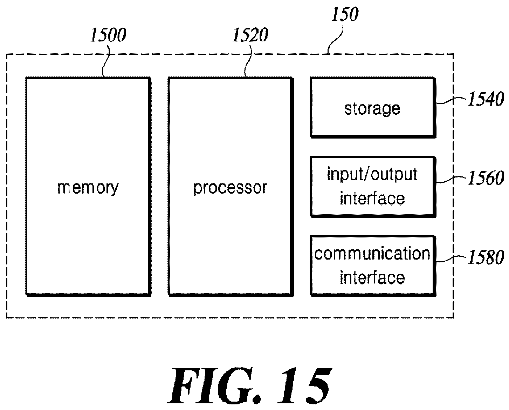

FIG. 15 is a block diagram schematically showing an example computing device that may be used to implement the apparatus and methods described in this disclosure.

Computing device 150 may include some or all of memory 1500, processor 1520, storage 1540, input/output interface 1560, and communication interface 1580. The computing device 150 may be a stationary computing device such as a desktop computer, server, etc., as well as a mobile computing device such as laptop computer, smartphone, etc. The computing device 150 may include any specialized hardware accelerator capable of processing operations on the artificial intelligence model in an efficient manner. For example, the computing device 150 may include a graphic processing unit (GPU), a tensor processing unit (TPU), or a neural processing unit (NPU).

The memory 1500 may store a program that causes the processor 1520 to perform a method or an operation according to various embodiments of the present disclosure. For example, the program may include a plurality of instructions executable by the processor 1520, and the method or operations described above may be performed by executing the plurality of instructions by the processor 1520. Memory 1500 may be a single memory or a plurality of memories. In this case, information required to perform the method or operation according to various embodiments of the present disclosure may be stored in the single memory or may be stored in the plurality of memories. When the memory 1500 is composed of the plurality of memories, the plurality of memories may be physically separated. The memory 1500 may include at least one of a volatile memory and a non-volatile memory. The volatile memory includes a static random access memory (SRAM), a dynamic random access memory (DRAM), and the like, and the non-volatile memory includes a flash memory and the like.

The processor 1520 may include at least one core capable of executing at least one instruction. The processor 1520 may execute instructions stored in the memory 1500. The processor 1520 may be a single processor or a plurality of processors.

The storage 1540 maintains the stored data even if the power supplied to the computing device 150 is cut off. For example, the storage 1540 may include a non-volatile memory and may include a storage medium such as a magnetic tape, an optical disk, and a magnetic disk. The program stored in the storage 1540 may be loaded into the memory 1500 before being executed by the processor 1520. The storage 1540 may store a file written in a program language, and a program generated by a compiler or the like from the file may be loaded into the memory 1500. The storage 1540 may store data to be processed by the processor 1520 and/or data processed by the processor 1520.

The input/output interface 1560 may provide an interface with an input device such as a keyboard, mouse, or the like and/or an output device such as a display device, printer, or the like. A user may trigger execution of the program by the processor 1520 via the input device and/or confirm a processing result of the processor 1520 through the output device.

The communication interface 1580 may provide access to an external network. Computing device 150 may communicate with other devices via communication interface 1580.

Each component of the apparatus or the method according to the present invention may be implemented by hardware or software, or may be implemented by a combination of hardware and software. In addition, functions of each component may be implemented in software and a microprocessor may be implemented to execute functions of software corresponding to each component.

Various implementations of the systems and techniques described herein may be realized in digital electronic circuitry, integrated circuitry, field programmable gate array (FPGA), application specific integrated circuit (ASIC), computer hardware, firmware, software, and/or combinations thereof. These various implementations may include being implemented with one or more computer programs executable on a programmable system. The programmable system includes at least one programmable processor (which may be a special-purpose processor or may be a general-purpose processor) coupled to receive data and instructions from, and send data and instructions to, storage system, at least one input device, and at least one output device. Computer programs (also known as programs, software, software applications or code) include instructions for the programmable processor and are stored in a "computer-readable recording medium".

The computer-readable recording medium includes any type of recording device in which data that may be read by computer system is stored. Such computer-readable recording medium may be a non-volatile or non-transitory medium such as a ROM, a CD-ROM, a magnetic tape, a floppy disk, a memory card, a hard disk, a magneto-optical disk, or a storage device, and may further include a transitory medium such as data transmission medium. In addition, the computer-readable recording medium may be distributed in a network-connected computer system, and computer-readable code may be stored and executed in a distributed manner.

Although the flowcharts/timing diagrams in this specification are described as sequentially executing respective processes, this is merely an illustrative description of the technical idea of an embodiment of the present disclosure. In other words, the flowcharts/timing diagrams are not limited to a time-series order, as those skilled in the art will be able to make various modifications and variations to the order described in the flowchart/timing diagram or to execute one or more of the processes in parallel without departing from the essential characteristics of one embodiment of the present disclosure.

The above description is merely illustrative of the technical idea of the present embodiment, and various modifications and variations will be possible to those skilled in the art without departing from the essential characteristics of the present embodiment. Therefore, the present embodiments are not intended to limit but to explain the technical idea of the present embodiment, and the scope of the technical idea of this embodiment is not limited by this embodiment. The protection scope of the present embodiment should be interpreted by the following claims, and all technical ideas falling within the scope equivalent thereto should be interpreted as being included in the scope of rights of the present embodiment.

## Claims

1. A method for detecting malfunction of a LIDAR, comprising:
acquiring point cloud data from the LIDAR;
determining whether the number of points comprised in the point cloud data is less than a point count threshold; and
determining whether the LIDAR has a fault based on the point cloud data by using a LIDAR malfunction detection model when the number of points is greater than or equal to the point count threshold,
wherein the LIDAR malfunction detection model is a pre-trained model based on a normal dataset and at least one LIDAR-abnormal dataset,
the normal dataset comprises preset statistics and point cloud data acquired from the LIDAR in a normal state, and
the LIDAR-abnormal dataset comprises point cloud data generated based on the normal dataset.

2. The method of claim 1, further comprising:
determining whether a confidence of the LIDAR malfunction detection model is less than a confidence threshold;
not increasing a LIDAR error accumulation count when the confidence of the LIDAR malfunction detection model is less than the confidence threshold, and increasing the LIDAR error accumulation count by 1 when the confidence of the LIDAR malfunction detection model is greater than or equal to the confidence threshold;
determining whether the LIDAR error accumulation count is greater than a LIDAR error accumulation threshold; and
determining that the LIDAR has a fault when the LIDAR error accumulation count is greater than the LIDAR error accumulation threshold.

3. The method of claim 1, further comprising:
preprocessing the point cloud data,
wherein the preprocessing comprises:
calculating a distance from an origin of a LIDAR coordinate system to each point comprised in the point cloud data;
sorting the points in ascending order of distance based on the calculation result; and
extracting and sampling a predetermined number of points based on the sorted result.

4. An apparatus for detecting malfunction of a LIDAR, comprising:
at least one memory storing instructions; and at least one processor,
wherein the at least one processor is configured to execute the instructions to perform:
acquiring point cloud data from the LIDAR;
determining whether a number of points comprised in the point cloud data is less than a point count threshold; and
determining whether the LIDAR has a fault based on the point cloud data by using a LIDAR malfunction detection model when the number of points is greater than or equal to the point count threshold,
wherein:
the LIDAR malfunction detection model is a pre-trained model based on a normal dataset and at least one or more LIDAR-abnormal dataset,
the normal dataset comprises preset statistics and point cloud data acquired from the LIDAR in a normal state, and
the LIDAR-abnormal dataset comprises point cloud data generated based on the normal dataset.
